Europäisches Patentamt

(19) European Patent Office

Office européen des brevets

(11) Publication number: **0 137 626**
**A1**

## (12) EUROPEAN PATENT APPLICATION

(21) Application number: **84305440.4**

(22) Date of filing: **09.08.84**

(51) Int. Cl.⁴: **B 27 N 3/00**
**C 08 L 97/02**

(30) Priority: **16.08.83 NZ 205297**

(43) Date of publication of application:
**17.04.85 Bulletin 85/16**

(84) Designated Contracting States:
**BE CH DE FR GB IT LI NL SE**

(71) Applicant: CANTERBURY TIMBER PRODUCTS LIMITED
Upper Sefton Road
Ashley Via Rangiora(NZ)

(72) Inventor: Jenkin, Donald John
11 Rika Place
Rotorua(NZ)

(72) Inventor: Chapman, Kelvin Malcolm
33 Kirkwood Avenue
Christchurch(NZ)

(74) Representative: Sherrard-Smith, Hugh et al,
Appleyard, Lees & Co. 15 Clare Road
Halifax, HX1 2HY(GB)

(54) Bonding of lignocellulosic material.

(57) The invention relates to a process for the bonding of lignocellulosic material, such as wood, in the production of reconstituted wood products, such as fibreboard, particleboard, plywood and the like, with a thermosetting resin. According to the process an exothermic reaction providing chemical is added to the wood fibres, particles or veneers during manufacture. During pressing of the fibres, particles or veneers the exothermic reaction providing chemical takes part in an exothermic reaction within the fibre-board, particle-board or plywood being produced, providing heat. This heat assists in curing the thermosetting resin more rapidly than would otherwise be the case.

Products of the process are also claimed.

Croydon Printing Company Ltd.

0137626

Our invention relates to the bonding of lignocellulosic material such as wood, in the manufacture of reconstituted wood products such as fibre-board, particle board (including waferboard), plywood, laminated and finger-jointed beams and boards and the like. The invention also has application to the bonding of other materials into solid products however, and the term "reconstituted wood product" is, for the purposes of this specification, intended to embrace not only all products comprised of discrete lignocellulosic material, including the aforesaid fibre-board, particle-board and the like and plywood and laminated and finger jointed beams and boards, obtained by any known process, but also products formed from synthetic or other materials in discrete form, to which the method of the invention, described herein with reference to lignocellulosic material, may be applied.

Processes conventionally used in the manufacture of reconstituted wood products generally involve forming a "mat" of wood fibres, particles or the like, and generally (though not necessarily) before forming, dispersing therethrough an adhesive or binder intended to bind the discrete lignocellulosic material together, or in the case of plywood laying down a number of layers of wood veneers (referred to herein also as a "mat" for convenience) with a binder spread therebetween, and subsequently applying heat and pressure to the mat, generally by way of a press, to compact the mat to the required thickness and density and to cure the binder so as to thereby form a solid product. In the case of laminated wood, such as a laminated beam for example, a plurality of laminations are generally coated with binder and are then brought together (to form a "mat") and "pressed" or held under pressure in a jig or

the like until the binder has cured. Similar jig "pressing" techniques are employed for butt finger-jointing finger-jointed boards.

Binders conventionally used comprise resin adhesives such as for example urea-formaldehyde, melamine-formaldehyde, phenol-formaldehyde, tannin-formaldehyde, resorcinol-formaldehyde and the like, and copolymers and blends thereof. These binders are "thermosetting" in that heat is required to set the binder to solid form from the liquid or semi-liquid form in which the binder applied to the lignocellulosic material. In most cases this heat is supplied by way of a heat and pressure providing press, but, in some cases, for example with laminated beams or finger-jointed boards or the like, ambient heat derived from the surrounding air is used and is sufficient to cure the binder over a period of time. Such binders will be referred to herein as "thermosetting binders" which term is intended to embrace any and all suitable binders.

The length of time for which the mat and the binder dispersed therethrough must be subjected to heat, and pressure, is largely dependent on the time taken for the resin binder to reach its cure temperature, and to cure. It is of course important that the binder is properly cured throughout the mat otherwise the resulting product will be deficient, and thus the mat must be maintained under the heat and pressure conditions for sufficient a length of time for heat to migrate from, for example, the press platens, throughout the mat including to the centre thereof to raise its temperature to the requisite level.

The time necessary to cure the binder (referred to herein as the "press time") is typically of the order of two to fifteen or more minutes and can, in a commercial environment, be a limiting factor on the speed at which reconstituted wood products can be manufactured, especially in the case of relatively thick products with which extended press time are necessary to ensure proper binder curing throughout. Moreover the level of heat which can be applied to the outer surfaces of the product in a press is limited by the temperature at which the lignocellulosic material begins to charr.

Similarly, some conventional binder systems used require the moisture content of the mat to be higher than the 10 to 12% usually encountered and the release of this moisture from within the mat in the press can delay the desired rise of the temperature therein, thus again requiring extended press times to ensure that the binder at the centre of the board is properly cured.

In accordance with our invention a chemical is dispersed throughout the mat, either before, during or after forming, which chemical is such as will provide or take part in an exothermic reaction within the mat itself to generate heat which will at least assist in curing the binder.

The invention may broadly be stated to comprise a method of curing or assisting to cure one or more thermosetting binders in the manufacture of a reconstituted wood product, said method including the step of dispersing within a conventionally formed mat (as hereinbefore defined) of lignocellulosic material, either before, during or after forming of the mat, with one or more thermosetting binders, a chemical or chemicals (herein: an exothermic reaction providing chemical) which during pressing of the said mat to form a reconstituted wood product will provide or take part in a chemical reaction generating heat which will cure or assist to cure the said thermosetting binder(s).

Also within the scope of the present invention are the products of the methods hereof.

Preferably the exothermic reaction providing chemical is dispersed substantially throughout the mat but the heat generated by the exothermic reaction is of most benefit in the areas of the mat farthest from, for example, the press platen i.e. the centre of the mat, and the invention includes the case where the exothermic reaction providing chemical is dispersed selectively throughout the mat, so that a higher concentration of the chemical is obtained in a selected region or selected regions thereof. For example, the exothermic reaction providing chemical could be injected into the mat after forming with larger amounts being injected into the centre of the mat, if the mat is formed of particles or fibres. Chemical could be sprayed onto the outer surface regions of the mat in conjunction with this injection, if it is to be applied to the outer portions as well as the centre of the mat. In another arrangement different sources of fibres/particles could be used to lay down the centre and outer portions of the mat and the different sources of fibres/particles could be treated with varying concentrations of chemical. Fibres/particles from a first source treated with a lesser concentration of chemical or with chemical to a lesser degree could be laid down as a bottom portion of a mat, followed by fibres/particles from a second source treated with a higher concentration of chemical to form the centre of the mat, followed by fibres/particles from the first source again to form the top portion of the mat. The fibres/particles could be laid down through a series of three heads for example. In the case of plywood or laminated beams or boards the centre veneers or laminations only could be treated with the exothermic reaction providing chemical or the centre veneers could be treated with chemical of a higher concentration or to a greater extent than the outer veneers

While the heat generated by the action of the exothermic reaction providing chemical may comprise the sole heat source provided to cure the binder, the method of the invention is most suited to use in the provision of an additional heat source in the manufacture of reconstituted wood products in a conventional heat and pressure providing press. In this case the heat generated by the action of the exothermic reaction providing chemical will supplement the heat provided by the press. Before pressing the chemical is for example admixed with the fibres, particles or the like, or is coated over the wood veneers or laminations, or butt ends of finger-jointed board, as is one or more thermosetting binders such as a resin adhesive, or throughout the binder itself (the two components can be applied together or separately), and in the press the exothermic reaction within the mat provided by the chemical or in which the chemical takes part will assist in raising the temperature within the mat, particularly at the mat centre. A given level of binder cure is achieved more rapidly than would otherwise be the case or, alternatively, for a given press time, a more complete binder cure is obtained with the resultant products often being found to

0137626

have improved strength properties.

It is preferred that the exothermic reaction providing chemical is such as will provide or take part in an exothermic reaction only on application of an initial activating degree of heat thereto so that the exothermic reaction may be activated, for example within a press, by the hot press platens contacting the surfaces of the product and in such case the method of the invention includes the additional step of applying an initial activating degree of heat to the mat during pressing to trigger the exothermic reaction. Exothermic reaction providing chemicals in accordance with the invention include hydrogen peroxide and this has been found to be particularly suitable in this regard since when dispersed throughout the mat as aforesaid it provides an exothermic reaction only on the application of an initial activating degree of heat. This aspect of the invention is further illustrated in the following examples.

The exothermic reaction provided by hydrogen peroxide in particular in the presence of lignocellulosic material is likely an oxidation reaction, though the fact that it is an oxidative reaction is otherwide largely incidental to the invention, and it and the requirement for an initial degree of heat to be applied to initiate the oxidation reaction are additionally described in an article entitled "Differential Scanning Calorimetry of Hydrogen Peroxide and Hydrogen Peroxide-Treated Lignocellulosic. I. Ambient Pressure Conditions" by Nguyen, Zavarin and Barrall appearing in Thermochimica Acta, 41 (1980) 107-116 - Elsevier Scientific Publishing Co, Amsterdam.

Exothermic reaction providing chemicals in accordance with the invention include peroxy compounds in general including peroxy acetic acid ($CH_3CO_3H$), nitrates and nitric acid, chlorates, chlorites and hypochlorites such as sodium hypochlorite, and indeed any suitable oxidants known, as for example disclosed in the aforementioned article. In fact any other chemical which will provide an exothermic reaction, if necessary under heat and pressure conditions, when admixed with discrete lignocellulosic material may be employed.

A suitable catalyst as will catalyse, promote or enhance the exothermic reaction may also be used and while the choice of catalyst will depend on the chemical used and reaction type provided, suitable catalysts may include salts of certain transition metals such as iron, cobalt, nickel, titanium, copper and manganese among others, which are capable of initiating Fenton-type oxidations with hydrogen peroxide, and "per-" compounds; certain transition metal oxides such as $OsO_4$, $WO_3$, $MoO_3$, $SeO_2$, $CrO_3$, $V_2O_5$, $TiO_2$, $Ta_2O_5$ and their derivatives, such as phospotungstic acids, molybdic acid, pervanadic acid and their salts, which are capable of undergoing Milas-type oxidations with hydrogen peroxide and "per-" compounds; and reducing agents and other compounds which undergo reactions with oxidising agents such as tannins, lignins and other phenolic and alcoholic compounds, aldehydes , ketones, sugars, and hydrazine among others. The catalyst may, if used, be applied typically with the exothermic reaction providing chemical or at any other suitable point.

The exothermic reaction providing chemical can be applied to the lignocellulosic material in various ways, amounts and concentrations. It is preferably applied to the lignocellulosic material in aqueous solution, which solution preferably comprises the exothermic reaction providing chemical in a concentration of between 1% and 90% by weight. In the case of fibre-board and particle-board preferred concentrations are in the range of 20% and 50%, with the aqueous solution ideally comprising a concentration of about 25% exothermic reaction providing chemical. In the case of plywood the aqueous solution preferably comprises between 30% and 50% exothermic reaction providing chemical. Further detail in this regard will become apparent from the following examples.

Alternatively the exothermic reaction providing chemical could be dispersed in the form of a powder which melts on the application of heat.

The exothermic reaction providing chemical is preferably applied to the lignocellulosic material in amounts whereby the exothermic reaction providing chemical is present in the mat, when formed, in a ratio of between 0.05 and 6.0 : 100, most preferably 0.5 and 2.0 : 100, by weight of exothermic providing chemical to lignocellulosic material, although for laminated and fingerjointed wood a ratio less than 0.5 : 100 by weight of exothermic reaction providing chemical to lignocellulosic material may be preferable. This is because although the amount of active chemical at the glueline may be the same, the bulk of wood between gluelines can be substantial in laminated and finger-jointed wood, thereby reducing the amount of exothermic reaction providing chemical relative to that of the overall amount of wood.

In the case of fibre-board and particle-board the exothermic reaction providing chemical is preferably present in a ratio of 1.0 : 100 by weight of exothermic reaction providing chemical to lignocellulosic material, while in the case of plywod the ratio is preferably between 0.5 and 1.5 : 100 by weight of exothermic reaction providing chemical to lignocellulosic material.

The exothermic reaction providing chemical may be applied to the lignocellulosic material at virtually any stage in the product forming process.

For example, in dry forming processes the chemical may be applied immediately after fibrising or chipping or the equivalent, before, during or after one or more drying stages (for example short residence time flash drying), before, during or after forming into a mat and so forth as will be obvious to those skilled in the art. In wet forming processes the chemical may be applied similarly and even during pulping. It is important however that thorough dispersion of the chemical throughout those areas of the mat desired to be subjected to heat from the exothermic reaction be achieved, such as the centre of the mat, and it has been found that thorough dispersion throughout the entire mat is, when desired (i.e. when the chemical is not applied selectively) best achieved if the chemical is applied prior to laying down of the lignocellulosic material into a mat, especially when relatively thick and/or dense products are being formed.

In the case of fibre-board and particle-board the exothermic reaction providing chemical could be applied by spraying of the chemical onto the particles or fibres before, during or after they are formed into a mat.

In the case of plywood the exothermic reaction providing chemical could be applied to the veneers together with the resin binder by curtain coating or roller spreading, for example, techniques well known in the art.

In the case of laminated wood, such as for example, laminated beams, or finger-jointed boards, the exothermic reaction providing chemical could be applied to the laminations or butt ends of individual boards by brushing on a mixture of the chemical and the resin binder.

The accompanying graphical figures schematically illustrate the more rapid rise in temperature, and thus the reduction in press time achievable using the method of the invention.

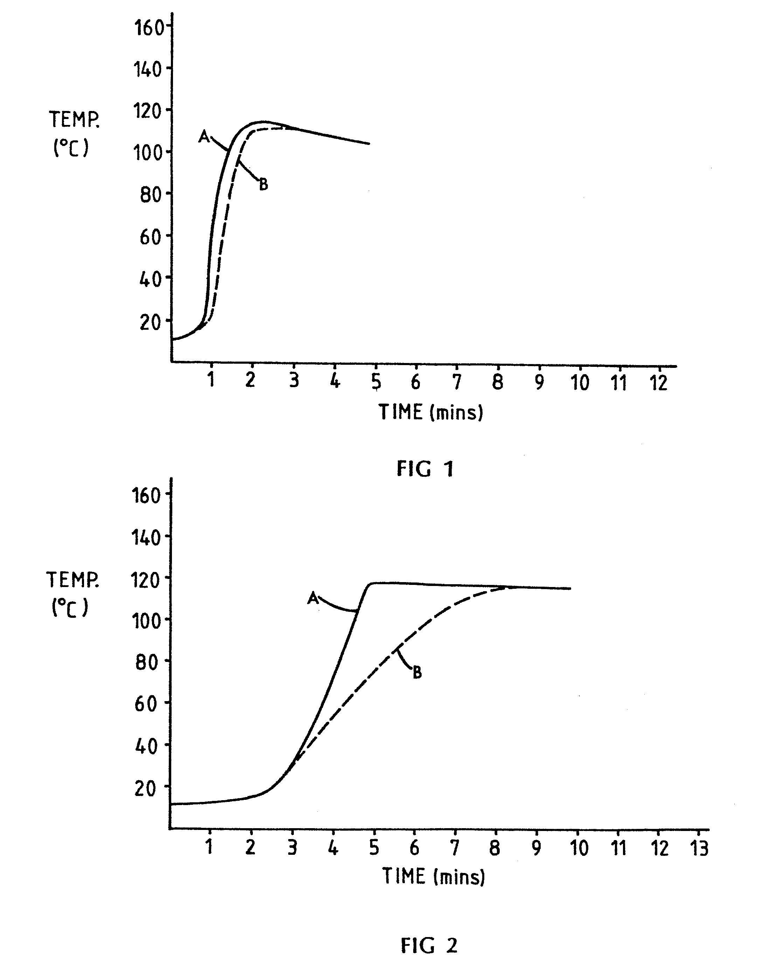

Fig. 1 shows a graph of temperature in $^{O}C$ mat-centre versus time in minutes of a mat of wood fibres compressed to give fibre-board of 12mm thickness. Line A shows the rate of temperature rise when hydrogen peroxide in aqueous solution at ca.25% concentration was dispersed throughout the mat prior to forming with the ratio of $H_2O_2$ to wood fibres being 1.0 : 100 by weight, while line B shows the rate of temperature rise without hydrogen peroxide or any other exothermic reaction providing chemical for an otherwise exactly equivalent board. In both cases the thermosetting binder used was tannin-formaldehyde.

Fig. 2 shows similar graphs for wood fibres compressed to give fibre-board of 25mm thickness i.e. relatively thick fibre-board, again using a 25% concentration aqueous solution of hydrogen peroxide at a $H_2O_2$ : wood fibres ratio of 1.0 : 100 and a tannin-formaldehyde binder.

It can be seen that in both cases the temperature at mat-centre reached $100^{\circ}$C much more quickly with the exothermic reaction providing hydrogen peroxide than without. This is particularly marked in the case of the 25mm board when the temperature at mat-centre reached around $100^{\circ}$C some two to three minutes more quickly than normal.

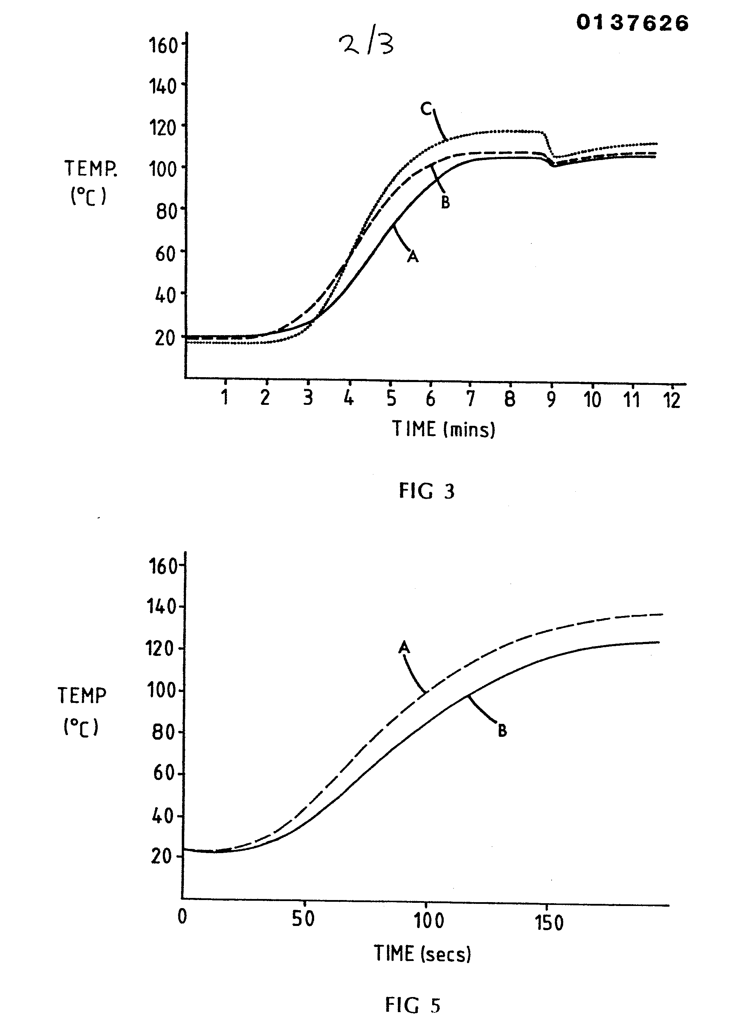

Figs. 3 to 5 show similar graphs, of results achieved with the following examples, which serve to further illustrate our invention, and should be read as part thereof.

EXAMPLE 1

Fiber prepared for commercial production of Medium Density Fiber-board panels as is known in the art was used to prepare three panels of 25mm thickness.

This fiber was prepared from softwood (mainly pine species) in a thermo-mechanical pulping process. Wax at a level of 0.8% approximately by weight of fiber was added to the refiner. Immediately after the refiner, urea formaldehyde resin at a level of 8% by weight of the fiber was added to the fiber as it left the refiner, but prior to drying in a flash dryer wherein the fiber/resin was dried to a moisture content of 11%. The fiber was subsequently used to prepare three mats, which were pressed to 25mm thick medium density fiber-board panels in a 600 x 450mm laboratory press to a typical position controlled cycle for producing MDF. The temperature of the press platens was $160^{\circ}C$. In each case the required quantity of fiber to produce the mat was weighed out and added to a laboratory blender. A constant volume of water/hydrogen peroxide mixture was sprayed onto the fiber with the hydrogen peroxide quantity being varied to give a level of:

0.0% hydrogen peroxide on fiber (Board A);

0.5% hydrogen peroxide on fiber (Board B); and

2.0% hydrogen peroxide on fiber (Board C).

The fiber was mixed in the laboratory blender for 10 minutes, after which time the mat was formed and pressed.

The temperature rise during pressing in the centre of the mat was measured by way of a thermocouple inserted into the mat before pressing, and the temperature indicated by the thermocouple for each of the three boards A, B and C is plotted against time in Fig. 3 of the accompanying drawings (Lines A, B & C).

It can be seen that a temperature of $100^{\circ}C$ is reached at the centre of the mat significantly earlier for the panels where hydrogen peroxide was used.

A temperature of $100^{\circ}C$ was reached at the centre of the mat:

315 seconds after the start of the pressing operation for the 2% hydrogen peroxide addition;

345 seconds after starting the press for 0.5% hydrogen peroxide; and

390 seconds after starting up the press for 0.0% hydrogen peroxide.

In addition the peak temperature reached in the centre of the mat was higher:

$120^{\circ}C$ for 2% hydrogen peroxide;

$109^{\circ}C$ for 0.5% hydrogen peroxide; and

$106^{\circ}C$ for 0.0% hydrogen peroxide.

EXAMPLE 2

The method of EXAMPLE 1 was used to make medium density fibreboard of 25mm thickness with a tannin binder derived from Pinus radiata bark extract.  Panels were made at each of the following levels of hydrogen peroxide addition:

0.0% hydrogen peroxide on over-dry fibre;

0.5% hydrogen peroxide on over-dry fibre;

1.0% hydrogen peroxide on over-dry fibre; and

2.0% hydrogen peroxide on over-dry fibre.

The temperature of the press platens was $165^{\circ}C$ and a temperature of $100^{\circ}C$ was reached at the centre of the pressed mat:

190 seconds after the start of the pressing operation for the 2.0% hydrogen peroxide addition;

270 seconds after the start of the pressing operation for the 1.0% hydrogen peroxide addition;

343 seconds after the start of the pressing operation for the 0.5% hydrogen peroxide addition; and 426 seconds after the start of the pressing operation for the 0.0 hydrogen peroxide addition.

The peak temperature in the centre of the pressed mat was higher when hydrogen peroxide was present:

$117^{\circ}C$ for 2.0% hydrogen peroxide;

$112^{\circ}C$ for 1.0% hydrogen peroxide;

111$^{O}$C for 0.5% hydrogen peroxide ; and

108$^{O}$C for 0.0% hydrogen peroxide.


The results obtained illustrate the considerable reductions in pressing time which are possible through the exothermic interaction of hydrogen peroxide with adhesives.


EXAMPLE 3


Using the method of EXAMPLE 1, tannin-bonded panels of 12mm thickness were made at each of the following levels of hydrogen peroxide addition:

0.0% hydrogen perioxide on oven-dry fibre;

0.5% hydrogen peroxide on oven-dry fibre ; and

2.0% hydrogen peroxide on oven-dry fibre.


The temperature of the press platens was 165$^{O}$C and a temperature of 100$^{O}$C was reached at the centre of the pressed mats:

80 seconds after the start of the pressing operation for the 2.0% hydrogen peroxide addition;

118 seconds after starting the pressing operation for the 0.5% hydrogen peroxide addition; and 133 seconds after starting the pressing operation for the 0.0% hydrogen peroxide addition.


The peak temperature reached in the centre of the pressed mats increased with increasing amounts of hydrogen peroxide:

127°C for 2.0% hydrogen peroxide addition ;

115°C for 0.5% hydrogen peroxide addition ; and

114°C for 0.0% hydrogen peroxide addition.

Again, the addition of hydrogen peroxide resulted in a more rapid cure of the tannin binder.

EXAMPLE 4

The stability of the tannin-hydrogen peroxide-fibre system was demonstrated by making panels of medium density fibreboard according to the method of EXAMPLE 1 for each of the following sets of conditions:

| | |
|---|---|
| Tannin binder | 12% |
| Hydrogen peroxide on oven-dry fibre | 2.0 |
| Time between forming and hotpressing | 0.0, 1.0 and 3.5 hours. |

The temperature of the press platens was 165°C and a temperature of 100°C was reached at the centre of the pressed mat:

80 seconds after the start of the pressing operation for 0.0 hours between forming and pressing;

78 seconds after starting the pressing operation for 1.0 hours between forming and pressing; ·

76 seconds after starting the pressing operation 3.5 hours between forming and pressing.

The peak temperatures reached in the centre of the pressed mats were:

127°C for 0.0 hours between the forming and pressing operations;

127°C for 1.0 hours between the forming and pressing operations; and

124°C for 3.5 hours between the forming and pressing operations.

The physical and mechanical properties of the panels were not affected by the length of the time period between forming and pressing. It can be seen that the tannin-hydrogen peroxide-fibre system is stable for at least 3.5 hours.

EXAMPLE 5

Plywood was made using 300m x 150mm sheets of Pinus radiata veneer of 3.2mm thickness. For each glueline a 40% aqueous solution of hydrogen peroxide or an equivalent amount of water (control board) was sprayed onto one surface and P. radiata bark tannin extract adhesive was spread on the other at the rate of $450g/m^2$. The panels were laid up 10 minutes after the application of the hydrogen peroxide. The laid up panels contained 10 plies with the core veneers being parallel laminated. They were prepressed at ambient temperature for 10 minutes at a pressure of 1 MPa. Immediately following prepressing each panel containing hydrogen peroxide was pressed at 150°C and 1.2 MPa with a matched control panel containing no hydrogen peroxide. The temperature of the

innermost glueline of each panel was monitored by way of a thermocouple inserted prior to prepressing. The amounts of hydrogen peroxide sprayed onto the veneer surfaces were:

Og hydrogen peroxide per square metre of veneer;

6g hydrogen peroxide per square metre of veneer;

12g hydrogen peroxide per square metre of veneer; and 18g hydrogen peroxide per square metre of veneer.

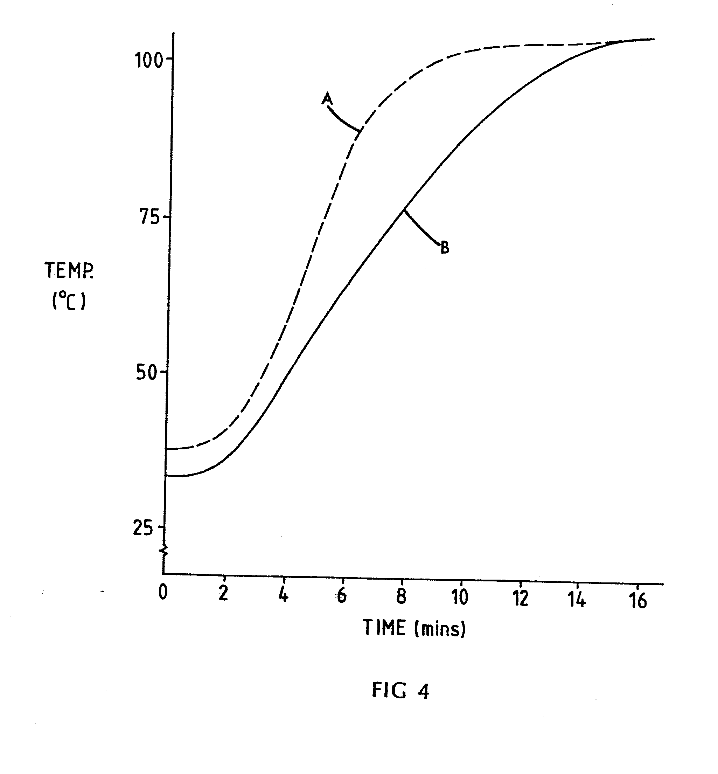

The increases in temperature as a function of time for a matched pair of panels, one sprayed with hydrogen peroxide at the rate of $12g/m^2$ of veneer (line A) and the other without hydrogen peroxide (line B) are illustrated in Fig. 4.

The time for the innermost glueline of each panel made with hydrogen peroxide to reach $100^{\circ}$C was recorded as a percentage of the time taken its matching pair containing no hydrogen peroxide to reach $100^{\circ}$C. The mean values for duplicate panels are shown below:

100% for the control panels containing no hydrogen peroxide;

86% for the panels sprayed with 6g hydrogen peroxide per square metre of veneer;

73% for the panels sprayed with 12g hydrogen peroxide per square metre of veneer; and

59% for the panels sprayed with 18g hydrogen peroxide per square metre of veneer.

EXAMPLE 6

Plywood (10-ply) was made by the method of EXAMPLE 5 except that the adhesive was phenol-formaldehyde and the time between spraying the hydrogen peroxide and spreading the adhesive (the peroxide assembly time) was varied. Hydrogen peroxide was applied at the rate of $18g/m^2$ to one veneer surface and adhesive was spread on the other. The time taken for the innermost glueline to reach $100^oC$ relative to that for the matched control (no hydrogen peroxide) was recorded. The peroxide assembly times before the veneer surfaces were laid up to form the gluelines were:

10 minutes peroxide assembly time;

1 hour peroxide assembly time; and

24 hours peroxide assembly time.

Duplicate panels were prepared for each peroxide assembly time and the results were averaged. The cure acceleration effect is reflected by the reduction in the time taken for the innermost glueline to reach $100^oC$ as shown:

100% for the control panels containing no hydrogen peroxide;

74% for the panels with a peroxide assembly time of 10 minutes;

77% for the panels with a peroxide assembly time of 1 hour; and

75% for the panels with a peroxide assembly time of 24 hours.

It can be seen that exotherm is still produced at least 24 hours after the application of hydrogen peroxide to the wood surface.

EXAMPLE 7

Plywood (10-ply) was made by the method of EXAMPLE 5. In this series the peroxide assembly time was 1 hour, the adhesive was phenol-formaldehyde and a catalytic amount of ferrous sulphate as the heptahydrate was incorporated into the adhesive formulation in some cases. Duplicate panels were made for each set of conditions and the results were averaged. The effect of the ferrous sulphate catalyst is illustrated by comparing the times for the innermost gluelines of the panels to reach $100^{\circ}C$ relative to that of the control (no hydrogen peroxide and no ferrous sulphate) panels:

100% for the control panels containing no hydrogen peroxide and no ferrous sulphate;

97% for the panels made with 6g hydrogen peroxide per square metre of veneer and no ferrous sulphate;

87% for the panels made with 12g hydrogen peroxide per square metre of veneer and no ferrous sulphate; and 87% for the panels made with 6g hydrogen peroxide per square metre of veneer and $5 \times 10^{-5}$ moles of ferrous sulphate per mole of hydrogen peroxide.

EXAMPLE 8

Single layer 300mm square particleboard panels of 12.2mm nominal thickness were made from P. radiata flakes. Target density was 700kg/m$^3$ at 8% moisture content. Hydrogen peroxide, at the rate of 1% by weight of oven-dry flakes, was sprayed onto the flakes as a 40% aqueous solution. An equivalent amount of water was sprayed onto a separate lot of flakes in lieu of hydrogen peroxide as a control. Tannin-formaldehyde resin was sprayed onto both lots of flakes at the rate of 10% of the weight of the oven-dry flakes. The mat moisture content was 18.3%, platen temperature was 170$^o$C, the pressure was 4 MPa, with time to stops 0.5 minutes. The boardswere pressed at maximum pressure for 2.5 minutes and the pressure was then released gradually over a further 1.0 minutes.

The temperature in the core of each panel was measured using a thermocouple and recording the output as a function of time on a datalogger.

Fig. 5 shows the temperature profiles for the two panels, one made using hydrogen peroxide (Line A) and the other without (line B).

The foregoing describes our invention including preferred forms thereof. The scope of the invention is defined in the following claims.

CLAIMS

0137626

1. A method of curing or assisting to cure one or more thermosetting binders in the manufacture of a reconstituted wood product, said method including the step of dispersing within a conventionally formed mat (as hereinbefore defined) of lignocellulosic material, either before, during or after forming of the mat, with one or more thermosetting binders, a chemical or chemicals (herein: an exothermic reaction providing chemical) which during pressing of the said mat to form a reconstituted wood product will provide or take part in a chemical reaction generating heat which will cure or assist to cure the said thermosetting binder(s).

2. A method according to claim 1 wherein the said exothermic reaction providing chemical is such as will provide on reaction sufficient heat to contribute at least substantially to the curing of the said conventional binder(s).

3. A method according to either claim 1 or claim 2 wherein the said exothermic reaction providing chemical is dispersed substantially throughout the said mat.

4. A method according to either claim 1 or claim 2 wherein the said exothermic providing chemical is dispersed selectively throughout the said mat to obtain a higher concentration of the exothermic reaction providing chemical in a selected region or regions thereof.

5. A method according to claim 4 wherein the said selected region is in substantially the centre of the said mat.

6. A method according to any one of the preceding claims wherein the said exothermic reaction providing chemical is such as will provide an exothermic reaction only on application of an initial activating degree of heat thereto and including the step of applying an initial activating degree to the said mat during pressing thereof.

7. A method according to any one of the preceding claims wherein the said exothermic reaction providing chemical is selected from peroxy compounds including peroxy acetic acid, nitrates and nitric acid, chlorates, chlorites and hypochlorites.

8. A method according to any one of the preceding claims wherein the said exothermic reaction providing chemical is hydrogen peroxide.

9. A method according to any one of the preceding claims wherein the said exothermic reaction providing chemical is dispersed in aqueous solution.

10. A method according to claim 9 wherein the said aqueous solution comprises the exothermic reaction providing chemical in a concentration of between 1% and 90%, by weight.

11. A method according to claim 9 wherein the said aqueous solution comprises the exothermic reaction providing chemical in a concentration of between 20% and 50%, by weight.

12. A method according to claim 9 wherein the said aqueous solution comprises the exothermic reaction providing chemical in a concentration of between 30% and 50%, by weight.

13. A method according to anyone of the preceding claims wherein the said exothermic reaction providing chemical is dispersed in the form of a powder.

14. A method according to claim 10 wherein the exothermic reaction providing chemical is added to the lignocellulosic material in a ratio of between 0.05 and 6.0:100 by weight of exothermic reaction providing chemical to lignocellulosic material.

15. A method as claimed in claim 14 wherein said ratio of exothermic reaction providing chemical to lignocellulosic material is between 0.5 and 2.0:100 by weight.

16. A method according to any one of the preceding claims wherein the heat generated by the said exothermic reaction is the sole source of heat provided to cure the said thermosetting binder(s).

17. A method as claimed in any one of the preceding claims 1 - 15 wherein the heat generated by the said exothermic reaction supplements heat provided during the said pressing.

18. A method according to any one of the preceding claims wherein the said exothermic reaction providing chemical is dispersed prior to forming of the lignocellulosic material into the said mat.

19. A method according to any one of the preceding claims 1 - 17 wherein the said exothermic reaction providing chemical is dispersed after forming of the lignocellulosic material into the said mat.

20. A method according to any one of the preceding claims wherein the said exothermic reaction providing chemical is dispersed by spraying.

21. A method according to any one of the preceding claims wherein the said exothermic reaction providing chemical is dispersed by curtain coating.

22. A method according to any one of the preceding claims wherein the said exothermic reaction providing chemical is dispersed by brushing.

23. A method according to any one of the preceding claims wherein the said exothermic reaction providing chemical is dispersed by roller spreading.

24. A method according to any of the preceding claims wherein the said conventional binder is formaldehyde based.

25. The method according to claim 24 wherein the said thermosetting binder comprises phenol-formaldehyde, urea-formaldehyde, melamine-formaldehyde, tannin-formaldehyde, resorcinol-formaldehyde, or a copolymer or blend thereof.

26. A method according to any one of the preceding claims wherein the said reconstituted wood product is fibre-board.

27. A method according to any one of the preceding claims 1 - 25 wherein the said reconstituted wood product is particle-board.

28. A method according to any one of the preceding claims 1 - 25 wherein the said reconstituted wood product is plywood.

29. A method according to any one of the preceding claims 1 - 25 wherein the said reconstituted wood product is laminated wood.

30. A method according to any one of the preceding claims 1 - 25 wherein the said reconstituted wood product is finger-jointed board.

31. A method according to any one of the preceding claims including the step of adding a catalyst which will catalyse, promote or enhance the exothermic reaction, said catalyst being selected from the group comprising salts of transition metals, and acids derived therefrom, and the salts of said acids, and reducing agents and other compounds which will react with oxidising agents.

32. A method of assisting to cure a thermosetting binder in the manufacture of fibre-board, said method comprising the steps of providing fibrised lignocellulosic material, dispersing throughout the said fibrised lignocellulosic material a chemical which during pressing of the lignocellulosic material to form a reconstituted wood product will provide or take part in an exothermic reaction generating heat which will supplement heat provided by the press, forming the said fibrised lignocellulosic material into a mat, pressing the said mat in a press which provides conditions of heat and pressure sufficient to cure the thermosetting binder and sufficient to activate the said exothermic reaction providing chemical causing same to take part in an exothermic reaction within the press, whereby the heat generated by said reaction supplements substantially the heat provided by the said press to assist in curing the said binder.

33. A method of assisting to cure a thermosetting binder in the manufacture of particle-board, said method comprising the steps of providing particlised lignocellulosic material, dispersing throughout the said particlised lignocellulosic material a chemical which during pressing of the lignocellulosic material to form a reconstituted wood product will provide or take part in an exothermic reaction generating heat which will supplement heat provided by the press, forming the said particlised lignocellulosic material into a mat, pressing the said mat in a press which provides conditions of heat and pressure sufficient to cure the thermosetting binder and sufficient to activate the said exothermic reaction providing chemical causing same to take part in an exothermic reaction within the press, whereby the heat generated by said reaction supplements substantially the heat provided by the said press to assist in curing the said binder.

34. A method of assisting to cure a thermosetting binder in the manufacture of plywood, said method comprising the steps of providing a plurality of veneers of lignocellulosic material, applying to the operative planar surfaces of the said veneers a thermosetting binder and a chemical which during pressing of the veeners to form plywood will take part in an exothermic reaction generating heat which supplements heat provided by the press, forming the said veneers into a mat, pressing the said mat in a press which provides conditions of heat and pressure sufficient to cure the said thermosetting binder and sufficient to activate the said exothermic reaction providing chemical causing same to take part in an exothermic reaction within the press whereby the heat generated by said said reaction supplements substantially the heat provided by the said press to assist in curing the said binder.

35. A method according to any one of claims 32 - 34 wherein the said exothermic reaction providing chemical is hydrogen peroxide in aqueous solution.

36. A reconstituted wood product whenever produced by the method according to any one of the preceding claims.

FIG 1

FIG 2

0137626

FIG 3

FIG 5

FIG 4

European Patent Office

**EUROPEAN SEARCH REPORT**

| | DOCUMENTS CONSIDERED TO BE RELEVANT | | EP 84305440.4 |
|---|---|---|---|

| Category | Citation of document with indication, where appropriate, of relevant passages | Relevant to claim | CLASSIFICATION OF THE APPLICATION (Int. Cl 4) |
|---|---|---|---|
| X | DD - A - 14 203 (MIELS) <br> * Page 2, lines 12-15 * <br> -- | 1,2 | B 29 J 5/00 <br> C 08 L 97/02 |
| A | CH - A - 410 426 (DEGUSSA) <br> * Page 3, lines 29-74 * <br> -- | 1,7 | |
| A | FR - A - 1 342 664 (AKEMI) <br> * Totality * <br> ---- | | |
| | | | **TECHNICAL FIELDS SEARCHED (Int. Cl.4)** <br><br> B 29 J <br> C 08 L |

The present search report has been drawn up for all claims

| Place of search | Date of completion of the search | Examiner |
|---|---|---|
| VIENNA | 06-11-1984 | TRATTNER |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82